Europäisches Patentamt

European Patent Office

Office européen des brevets

(11) Publication number: **0 407 947 A2**

# (12) EUROPEAN PATENT APPLICATION

(21) Application number: 90113106.0

(22) Date of filing: 09.07.90

(51) Int. Cl.⁵: **G02F 1/1335**

(30) Priority: 12.07.89 JP 179504/89
27.07.89 JP 194497/89
08.11.89 JP 290519/89
20.03.90 JP 70308/90
12.04.90 JP 96913/90
16.04.90 JP 99528/90
16.04.90 JP 99529/90
17.04.90 JP 101110/90

(43) Date of publication of application:
16.01.91 Bulletin 91/03

(84) Designated Contracting States:
CH DE FR GB LI

(71) Applicant: SEIKO EPSON CORPORATION
4-1, Nishishinjuku 2-chome
Shinjuku-ku Tokyo-to(JP)

(72) Inventor: Matsushima, Fumiaki, c/o Seiko
Epson Corporation
3-5, Owa 3-chome
Suwa-shi, Nagano-ken(JP)
Inventor: Ohno, Yoshihiro, c/o Seiko Epson
Corporation
3-5, Owa 3-chome
Suwa-shi, Nagano-ken(JP)
Inventor: Ogino, Shigeyuki, c/o Seiko Epson
Corporation
3-5, Owa 3-chome
Suwa-shi, Nagano-ken(JP)
Inventor: Matsui, Kuniyasu, c/o Seiko Epson
Corporation
3-5, Owa 3-chome
Suwa-shi, Nagano-ken(JP)

(74) Representative: Blumbach Weser Bergen
Kramer Zwirner Hoffmann Patentanwälte
Radeckestrasse 43
D-8000 München 60(DE)

(54) Color filter and process for preparing the same.

(57) Disclosed is a color filter which comprises a transparent substrate and a transparent electrode thin film formed thereon, the transparent electrode being intended to be used as an electric signal transmitting medium of a display device to which the color filter is applied. Further disclosed is a process for preparing the color filter which comprises the steps of forming the transparent electrode thin film on the transparent substrate and subjecting the transparent electrode thin film to patterning to a predetermined pattern, forming a pigment film by immersing the transparent electrode substrate in a micellar aqueous solution of a surfactant having a redox reactivity and having an organic pigment dispersed therein colloidally and carrying out an electrolysis, and forming a polymer material tissue on at least voids in the pigment film, or on the voids of the pigment film and on the pigment film.

FIG. 1

## COLOR FILTER AND PROCESS FOR PREPARING THE SAME

This invention relates to a color filter which is employed for a color display device such as a liquid crystal panel, etc. and a process for preparing the same.

US Appln. No. 07/344,636, 28.04.1989, proposes a color filter and a process for preparing the same which comprises after dispersing an organic pigment in an aqueous micellar solution of a surfactant having redox reactivity to form colloids and then subjecting a transparent substrate to electrolysis in said aqueous micellar solution, to deposite said organic pigment on a transparent electrode formed on the transparent substrate to form a pigment film.

In the following, five specific problems involved in the above mentioned proposal are described:

(1) The color filter if applied to a liquid crystal panel has a merit that a transparent electrode used for liquid crystal driving can be employed for electrolytic film preparation of a pigment film, so that low production costs are achieved.

However, regarding a liquid crystal panel which is required for high liquid crystal driving property, since the pigment film having a high resistance is interposed between the electrode and the liquid crystal, a loss of an applied voltage is caused due to the presence of the pigment film at liquid crystal driving so that lowering in liquid crystal driving property, even though it is little, becomes a problem.

(2) The pigment film of the color filter can be formed by deposition of organic pigment fine particles. Accordingly, it can be considered that the adhesiveness between particles and the substrate and between particles with each other is based on physical adsorption which is an extremely weak force. Therefore, problems are caused due to the weak adhesiveness of the film such as peel off at film formation, peel off of the film at a washing procedure after film formation, peel off at a washing procedure using a physical energy such as an ultrasonic wave, etc. at a panel forming procedure when it is applied to a liquid crystal panel, and peel off caused by press rubbing which is a treatment for orientation of the liquid crystal.

(3) Peel off of the film occurs only at the upper layer portion thereof so that the problem is caused that, when unevenness of the film surface becomes remarkable, an insufficient orientation of the liquid crystal results. Further, the above problem induces the problem that the contrast of each part in the pigment film fluctuates.

(4) Since the pigment film is formed only by the organic pigment, if the color tone is made optimum, the difference in film thicknesses of each pigment film of the three primary colors, i.e. R, G and B, becomes about 0.5 $\mu$m between the thickest film and the thinnest film. This difference in film thickness becomes a problem when the films are applied to an STN (Super Twisted Nematic) type liquid crystal panel. That is, in the STN liquid crystal panel, if liquid crystal cell gaps are not uniform within a tolerance of $\pm$ 0.05 $\mu$m, a markable unevenness in display (fluctuation in contrast) develops. Accordingly, the film thickness of the pigment film should be uniform in order to achieve uniform liquid crystal cell gaps.

(5) The pigment film is in principle formed at all parts at which an electrode is dipped in an electrolyte and current passes. Accordingly, when it is applied to the liquid crystal panel, the pigment film is also formed on a sealing portion to which a reference electrode is adhered or a portion to which a driving IC is connected during the procedure of panel preparation.

If the pigment films are present at these portions, the problem is caused that the durability of the panel is lowered due to insufficient adhesion at the sealing portion or connecting of IC becomes insufficient. In order to overcome these problems, the pigment films were wiped off from the sealing portion and IC connected portion. However, this operation requires many steps and it is difficult to completely wipe off the pigment films so that the problems of an increase in costs or lowering in reliability remain unsolved.

An object of the present invention is to solve the problems involved in the prior art as mentioned above, and in more in detail:

(1) to provide a process for providing electroconductivity to a pigment film,
(2) to provide a process for improving the adhesiveness of the pigment film,
(3) to provide a process for smoothening the surface of the pigment film,
(4) to provide a process for making the film thickness of each pigment film substantially equal to one another, and
(5) to provide a process for preventing the formation of the pigment film at the sealing portion or IC connecting portion in advance.

These objects are achieved with a color filter and a process for preparing it as claimed.

These processes can be applied simultaneously but may be selected depending on the purposes and the specific application.

The process for preparing the color filter may be summarized as follows:

Dispersing an organic pigment in a micellar aqueous solution of a surfactant having a redox reactivity, immersing in said micellar aqueous solution a transparent substrate having formed thereon a transparent electrode to a predetermined pattern, performing an electrolysis while using said transparent electrode as an anode to effect electric oxidation of micells, and depositing on the anode the organic pigment fine particles encapsulated in the micells by destruction of the micells to form a pigment film composed only of the organic pigment. The surfactant having a redox reactivity may include those having a chemical structure wherein metallocene such as ferrocene, etc. is introduced in the hydrophobic terminal end group. Different electrolytes are prepared so as to obtain pigment films of the three primary colors of R, G and B, and electrolysis is carried out in each of the electrolytes to form each pigment film of R, G and B successively whereby a color filter can be prepared. The transparent substrate is usually of glass and the transparent electrode formed thereon may include ITO (Indium Thin Oxide) or $SnO_2$.

Specific embodiments of the invention will be described below with reference to the drawings, wherein

Fig. 1 is a graph showing the profile of an organic pigment thin film formed by using the process of the present invention,

Fig. 2 is a graph showing the profile of an organic pigment thin film formed by using the conventional method, and

Fig. 3 is a schematic drawing showing a resist-coated color filter of the present invention wherein reference numeral 11 shows a resist-coated portion.

(1) First, a method for making the pigment film electrically conductive is explained.

As a first method, the following can be mentioned. That is, when preparing an electrolyte, conductive material fine particles are simultaneously dispersed and made to a colloidal dispersion with the organic pigment. The organic pigment and the conductive material are codeposited to make the pigment film conductive, i.e. of a low resistance. The conductive material is not particularly limited, but fine particles of such as ITO, $SnO_2$, $SnO$ and carbon can be readily used. In the process of the present invention, when these materials are oxides, they can be used by effecting a hydrophobic treatment on their surface.

A second method is that, after forming a pigment film, conductive polymer material is formed as a film on at least void portions of the pigment film and on the surface of the pigment film. The pigment film comprises a deposite film of pigment particles having a primary particle diameter of 0.1 μm or so and a structure wherein many voids are present between pigment particles. By using a substrate having formed thereon the pigment film, organic electrolytic polymerization is carried out to form a conductive polymer material. The organic electrolytic polymerization is a technique generally proposed as a method of forming a conductive polymer on an electrode by electrolysis. Accordingly, by using a substrate having formed thereon the pigment film, a conductive polymer is grown and formed in voids between pigment particles like a network structure, and as a result, the pigment film becomes conductive. When this method is used, the formed conductive polymer material is colored so that if the film is made thick, deterioration in color tone of the color filter is caused. Accordingly, film formation should be carried out within a range of tolerable deterioration of the color tone.

This method can be also applied as a method for improving the adhesiveness of the pigment film as mentioned hereinbelow.

Monomers which can effect electrolytic polymerization include a compound having unsaturated bond(s) such as pyrrol or derivatives thereof, aniline or derivatives thereof and thiophene or derivatives thereof.

(2) Next, a method for improving the adhesiveness of the pigment film is explained below. Either of the methods mentioned below is to retain adhesiveness of the pigment film by forming a polymer material having high transparency at voids of the pigment film and on the surface of the pigment film.

A first method is to form a polymer material by an electrochemical method. One such method is the organic electrolytic polymerization method mentioned above. Another one of the electrochemical methods is an electrodeposition method. That is, in an aqueous solution of acrylic acid, etc. which can be electrically adsorbed onto an electrode when a substrate electrode on which the pigment film was formed is used as an anode and electrolysis is carried out, a polymer precursor such as acrylic acid, etc. is electrodeposited on the pigment film. In this electrodepositing solution, melamine, etc. is generally also dissolved and deposited simultaneously whereby the curing reaction at the post treatment is accelerated.

As a second method, a coating method can be mentioned. That is, the pigment film is impregnated and its surface coated by a polymer precursor or polymer molecules by a coating method, which is then cured by a post treatment to form a polymer material. As the coating method, the spin coating method, the roll coating method, the curtain coating method, the flexographic printing method, the screen printing method, the offset printing method, the spray method, etc. can be applied.

As third method is a method in which a substrate on which the pigment film has been formed is immersed in a polymer precursor solution or a polymer solution to impregnate the pigment film by the polymer precursor or the polymer.

A polymer material structure formed according to the above methods is preferably formed in a way to sufficiently impregnate the pigment film and with such a thickness on the pigment film that the liquid crystal driving property is not lowered. Such materials include heat polymerization type materials, oxidation polymerization type materials, photocuring type materials, and a material wherein curing is achieved merely by evaporating a solvent, etc. Preferred are those materials having a high transparency and no coloring after polymerization or curing.

(3) Next, a method for smoothening the surface of the pigment film is explained below.

The pigment film formed by electrolysis partly peels off when taken out of an electrolyte immediately after film formation and sometimes also peels off at a later washing procedure. If the film formation is carried out under constant film forming conditions, the pigment film seldom peels off totally, but when the formed pigment film is thick, an upper layer portion of the pigment film partly peels off whereby the surface of the pigment film becomes uneven. Accordingly, the method of smoothening the pigment film is to repeatedly carry out the film formation procedure each time forming a thin pigment film layer of uniform thickness and the polymer material formation procedure for retaining adhesiveness of the pigment film layers. In that way a pigment film with a predetermined film thickness and a smooth surface can be obtained. As the method of forming a polymer material and the material itself, the method and the material which are described in the above method for improving the adhesiveness can be applied. The curing procedure as the post treatment of the polymer material may be carried out at each of the repeated steps or one at the end of the repeated formation steps.

As the method of forming the polymer material electrochemically, the following method can be mentioned in addition to those mentioned above. That is, in an electrolyte used for forming a pigment film is dissolved a cationic polymer precursor which is capable of electrodeposition, and then as the first electrolysis, electrolysis is carried out at not less than micell destruction potential of a surfactant and not more than film formation potential of the polymer precursor to deposite only the organic pigment. As the second electrolytic procedure, electrolysis is carried out at not less than film formation potential of the polymer precursor to form a pigment film comprising an organic pigment and the polymer material. By using repeatedly the first and the second electrolytic procedures, a pigment film having a desired film thickness can be formed. Incidentally, the present process is different from the so-called electrodeposition method wherein a polymer precursor and a pigment, etc. are dispersed in an electrolyte and then codeposited. That is, the composition ratio of the polymer precursor and the pigment, etc. is markedly different in both cases. Another difference is that in the second procedure, the polymer precursor, so to speak, permeates the pigment film prepared in the first procedure whereby the adhesiveness of the film can be retained.

(4) A method for making each pigment film to the same film thickness is mentioned below.

This method is a technique required for applying the color filter of the present invention to an STN type liquid crystal panel wherein unevenness in display, particularly fluctuation in contrast markedly appears if a film thickness difference is present between the individual pigment films when a liquid crystal panel is prepared as described above. A first method is carried out by, after forming each pigment film so as to have a predetermined color tone, forming electrochemically a transparent polymer material on each pigment film with a predetermined film thickness. That is, by controlling the film thickness of the transparent polymer material formed on the pigment film, the films are formed so as to be equal in total film thicknesses of the pigment film and the polymer material. As the method of forming the polymer material, the electrochemical method mentioned above can be applied.

As a second method, fine particles of a transparent polymer are also dispersed in an electrolyte used to form a pigment film in addition to an organic pigment and then these materials are codeposited. That is, with respect to a pigment film which can sufficiently retain a color tone even as thin film when forming each pigment film of R, G and B, the apparent pigment film thickness is increased by increasing the concentration of the polymer in an electrolyte whereby heightening codepositing ratio, and thus the film thicknesses of the individual pigment films are made equal to each other. As the polymer to be used, those which are insoluble to water and having a high hydrophobic property are preferred, and atomized ones to at least 1 $\mu$m or less by using a sand mill are preferred. Also, those other than atomized ones, for example, including a polymer with low polymerization degree or an oligomer as such may be dispersed in a micellar aqueous solution.

(5) Finally, a method for preventing a formation of the pigment film at a sealing portion at which opposite substrates are adhered to each other during a liquid crystal panel making procedure and at a driving IC connecting portion is described below.

First, a transparent electrode is subjected to patterning to a predetermined pattern on a transparent substrate, and then a resist is formed with a predetermined pattern on a portion of said substrate where formation of the pigment film is not necessary. As the method of pattern formation of the resist, there is a method in which by using a so- called negative type or positive type photoresist which is UV ray curable or a decomposition type, it is formed by a photolithographic process. Also, it may be formed by using a means capable of forming a pattern directly such as the flexographic printing, the screen printing, the offset printing, etc.

As the resist material, the photoresist mentioned above may be used or a heat or electron radiation curing type resist may be used.

Thereafter, the substrate is immersed in a micellar electrolyte and when pulling up, the micellar electrolyte is likely to remain at the resist and the transparent electrodes and thin lines of a pigment film are likely to be generated along the resist pattern. As a countermeasure to this, sufficient water washing is required after micellar electrolysis, but as another method, there is a method of adding a water repellent substance to the resist material.

As the water repellent substance, a silicone series resin, a fluorine series resin, a silicone series surfactant, a fluorine series surfactant and the like may be mentioned.

The amount of these water repellent materials may vary depending on the kind of the resist material and the water repellent substance, but it may be 0.005 % by weight or more. The upper limit is the range in which these water repellent substances can be mixed with the resist material without impairing the characteristics of the resist material.

After formation of the resist pattern, the pigment film is formed by electrolysis and after formation of each pigment film, the resist is stripped off.

**EXAMPLES**

Example 1

In order to prepare a red pigment film having conductivity, Chromophthal A3B produced by Ciba Geigy AG was used as a red organic pigment. As the conductive material, $SnO_2$ powder which had been subjected to hydrophobic treatment was used. The hydrophobic treatment was carried out by dispersing $SnO_2$ powder in an isopropyl alcohol solution containing 5 % of aminosilane (trade name: SH 6020, produced by Toray Co.) using an ultrasonic wave, volatilizing the isopropyl alcohol, and then sintering the remaining solid at 120° C to introduce an organic chain on the surface of $SnO_2$. After sintering, the sintered product was pulverized by a sand mill to obtain powder having a particle size of 0.2 $\mu$m or less.

By using these materials, an electrolyte was prepared with the following composition:

| | |
|---|---|
| 1. Surfactant which can be at least oxidized by electrolysis | |
| Ferrocenyl PEG (produced by Dojin Kagaku Co.) | 3 g |
| 2. Supporting electrolyte | |
| LiBr | 5.24 g |
| 3. Red organic pigment | |
| Chromophthal A3B | 5 g |
| 4. $SnO_2$ fine particles subjected to hydrophobic treatment | 5 g |

These components were poured into 1 liter of pure water and the components of 3 and 4 were dispersed by an ultrasonic wave homogenizer as fine particles for film forming material. This dispersion was allowed to stand for 2 hours and the supernatant was dispensed to be used for electrolysis.

As the film forming substrate, a glass substrate having formed thereon an ITO film with a thickness of 0.1 $\mu$m was used. This ITO film was used as an anode and a platinum plate was used as a cathode and electrolysis was conducted with + 0.4 V (vs. S.C.E.) for 30 minutes.

According to this operation, a thin film having a thickness of 1.5 $\mu$m in which fine particles of the red pigment and $SnO_2$ were codeposited was obtained.

The resistivity was measured to be $1 \times 10^6$ $\Omega$cm.

As a comparative sample, the same electrolyte except that it contained no $SnO_2$ was prepared and

electrolysis was conducted under the same conditions as mentioned above for 30 minutes, so that a thin film composed of the red pigment only with a thickness of 1.0 $\mu$m was obtained. The resistivity was 1 x $10^{10}$ $\Omega$cm.

That is, according to the present invention, a $10^4$-fold conductivity is provided to a pigment which, by itself, is a substantially insulating material.

Further, by using the pigment + $SnO_2$ film of this Example, a liquid crystal cell was prepared and the driving property of the liquid crystal was examined. As the result, it showed substantially the same liquid crystal driving property as in the case wherein no pigment film was formed on an electrode.

Also, it can be confirmed that the color tone of the pigment film is not remarkably changed even when $SnO_2$ is codeposited so that it can be satisfactorily used as a color filter for a liquid crystal display.

Example 2

In the same manner as in Example 1, a codeposited film of ITO fine particles and the red pigment with a thickness of 1.4 $\mu$m was prepared. The resistivity was 1 x $10^5$ $\Omega$cm confirming the effect of the present invention.

In the same manner as in Example 1, a codeposited film of ZnO fine particles and the red pigment with a thickness of 1.7 $\mu$m can be obtained, provided that ZnO is used after having been subjected to a hydrophobic treatment of the surface thereof by a fluorine series surfactant. The resistivity was 1 x $10^7$ $\Omega$cm confirming again the effect of the present invention.

Example 3

On a glass substrate having a diagonal of 2.5 inches (6.35 cm) was formed an ITO film as a transparent electrode by sputtering, and further it was formed into 300 stripe-like electrodes, each having a width of 100 $\mu$m and a line distance pitch of 130 $\mu$m.

Next, each of micellar colloidal aqueous solutions of red, green and blue pigments (organic pigments) having compositions shown in Table 1 was prepared and each pigment film was formed by electrolysis at the anode side, respectively.

Table 1

| Pigment | Pigment concentration | Surfactant *1 | Supporting electrolyte *2 |
|---|---|---|---|
| 1 Red *3 | 6 g/l | 1.5 mM | 0.05 M |
| 2 Green *4 | 14 g/l | 1.5 mM | 0.05 M |
| 3 Blue *5 | 7 g/l | 1.0 mM | 0.05 M |

*1 Ferrocenyl PEG (produced by Dojin Kagaku Co.)
*2 LiBr
*3 Anthraquinone series pigment
*4 Halogenated copper phthalocyanine
*5 $\epsilon$ type copper phthalocyanine

The electrolysis potential was + 0.4 V (vs. S.C.E.) and the electrolysis time was adjusted so that the pigment film thickness of red was 0.8 $\mu$m, green 0.8 $\mu$m and blue 0.7 $\mu$m, respectively. Also, the pigment layer was formed by selectively passing a current to the end of the electrode pattern during electrolysis so as to obtain repeated stripe patterns of red, green and blue. After film formation, the formed material was sintered at 180 °C for 30 minutes in order to improve the adhesiveness.

By the operations as mentioned above, pigment layer comprising the repeated stripe pattern of the three colors red, green and blue can be formed.

Subsequently, by using the substrate having formed thereon the pigment layer obtained by the above operations, organic electrolytic polymerization was conducted to effect formation of a conductive polymer structure on the whole pigment layer simultaneously.

As the electrolytic polymerization solution, one containing propylene carbonate as a solvent and having the compostition as shown below was used.

| N-methylpyrrol | 0.1 M |
|---|---|
| Lithium perchlorate | 0.2 M |

Using the transparent electrodes on the substrate as anode, platinum plate as a counter electrode (cathode), electrolytic polymerization was conducted with a constant potential of + 1.0 V for 3 minutes to form a conductive polymer (poly-N-methylpyrrol) at voids between pigment particles, and further on the pigment layer with a thickness of 0.05 to 0.1 $\mu$m. After washing with pure water, the resulting material was dried at 150 $^{\circ}$C for 30 minutes.

Since the conductive polymer generally has a dark brown color, when it is formed on the pigment layer too thick, the color tone of the pigment layer is lowered. Therefore, the conductive polymer film was formed with a thickness which does not affect to color tone.

By the operations as mentioned above, a color filter of the present invention was prepared.

Finally, by using an opposite substrate having formed thereon MIM elements, a TN type matrix liquid crystal panel was made by passing through a predetermined liquid crystal panel making process.

As a result of examination of the driving characteristics of the liquid crystal, it can be confirmed that the liquid crystal panel of the present invention had substantially the same characteristics as in the case where no pigment layer was formed, i. e. no loss in applied voltage occurred, whereby the effect of the present invention was confirmed.

Example 4

A pigment layer was formed in the same manner as in Example 1. Subsequently, an electrolytic polymerization operation was conducted.

As an electrolyte, components of

| aniline | 0.1 M |
|---|---|
| magnesium perchlorate | 0.2 M |

dissolved in pure water were used.

Constant potential electrolysis was conducted with an electrolytic potential of + 0.5 V (vs. S.C.E.) for 3 minutes to form a conductive polymer (polyamine). The film thickness was made as in Example 1.

Following Example 1, a TN type active matrix liquid crystal panel was prepared and evaluated. As the result, the liquid crystal driving property turned out to be as good as in Example 1 and the effects of the present invention were confirmed.

Example 5

A pigment layer was formed in the same manner as in Example 1. Subsequently, an electrolytic polymerization operation was conducted.

As an electrolyte, components of

| Pyrrol | 0.1 M |
|---|---|
| LiBF$_4$ | 0.2 M |

dissolved in propylene carbonate were used.

Constant potential electrolysis was conducted with an electrolytic potential of + 1.0 V (vs. S.C.E.) for 2 minutes to form a conductive polymer (polypyrrol). The film thickness was made substantially the same as in Example 1.

Following Example 1, a TN type active matrix liquid crystal panel was prepared and the effects of the present invention could be confirmed.

### Example 6

On a glass substrate having a diagonal of 5 inches (12.7 cm) was formed an ITO film as a transparent electrode by sputtering, and further it was formed into 300 stripe-like electrodes, each having a width of 100 $\mu$m by using a photolithographic method.

Next, each of micellar colloidal aqueous solutions of red, green and blue pigments (organic pigments) having the compositions shown in Table 2 was prepared and each pigment film was formed by electrolysis, respectively.

Table 2

| Pigment | Pigment concentration | Surfactant *1 | Supporting electrolyte *2 |
| --- | --- | --- | --- |
| 1 Red *3 | 6 g/l | 1.5 mM | 0.05 M |
| 2 Green *4 | 14 g/l | 1.5 mM | 0.05 M |
| 3 Blue *5 | 7 g/l | 1.0 mM | 0.05 M |

*1 Ferrocenyl PEG (produced by Dojin Kagaku Co.) (which can be oxidized and reduced by electrolysis)
*2 Lithium bromide
*3 Anthraquinone series pigment
*4 Brominated chlorinated copper phthalocyanine
*5 $\alpha$ type copper phthalocyanine

The electrolysis potential was + 0.4 V (vs. S.C.E.) and the electrolysis time was adjusted so that each of the pigment films had a thickness of 1.0 $\mu$m. Also, the pigment thin layer was formed by selectively passing a current through different electrodes during electrolysis so as to obtain a repeated stripe pattern of red, green and blue films. After film formation, the formed material was sintered at 180° C for 30 minutes.

By the above operations, a pigment layer comprising the repeated stripe pattern of the three colors red, green and blue can be formed.

Subsequently, the substrate having formed thereon the pigment layer obtained by the above operations was immersed in a polymer precursor solution which is capable of electrodesposition, and electrodeposition of the polymer precursor was conducted by utilizing the transparent electrode on which the pigment thin films were formed as an electrode for electrodeposition.

The polymer precursor solution contained acrylic acid and melamine with the ratio of 7 : 3 and also contained isopropyl alcohol and butyl cellosolve (produced by K.K Shimizu), and it was used after adjusting the concentration of acrylic acid + melamine to 5 % by weight.

Electrodeposition was conducted by using the transparent electrodes on which the pigment thin film had been formed as an anode, and applying + 3.5 V between this anode and opposite electrodes made of platinum for 5 minutes. After electrodeposition, the deposited material was washed in pure water for 30 seconds and after shaking off drying of water by a spin dryer, sintered at 180° C for 30 minutes.

According to the above operations, an acryl-melamine polymer was formed within voids of the pigment films. Also, on the pigment films, only 0.05 $\mu$m of the polymer film was formed.

Whether the polymer material had been formed in the pigment films or not was confirmed by an adhesive test. That is, even when an adhesive test by peeling off of a scotch tape adhered to the completed color filter was carried out, no peel off was caused.

Also, by immersing the products in an alkali defatting solution (60° C) and subjecting them to ultrasonic wave washing, no problems occurred with the product of the present example, while the conventional one with the pigment thin film only showed a partial peel off after 20 seconds.

9

Further, the product was used in the liquid crystal panel making process but no problem occurred and no damage by the rubbing treatment.

Finally, by using a TN type liquid crystal, a color liquid crystal panel was prepared and the driving characteristics of the liquid crystal were examined. As the result, no difference was found as compared with the conventional single material film, i.e. good results were obtained.


### Example 7

After forming pigment thin films of three colors in the same manner as in Example 6, this substrate with the pigment thin films thereon was immersed in a monomer solution capable of effecting electrolytic polymerization, and by using the substrate electrodes as an anode, electrolytic polymerization was conducted.

The monomer solution employed propylene carbonate as a solvent and contained 0.2 M of N-methylpyrrol and also 0.2 M of lithium perchlorate as a supporting electrolyte.

Electrolytic polymerization of N-methylpyrrol was conducted by using platinum plates as opposite electrodes with constant current polymerization of 0.05 mA/cm² for one minute.

After conducting electrolytic polymerization, the substrate was dried at 150° C for 10 minutes.

According to the above operations, poly-N-methylpyrrol was formed in the pigment films. Also, on the pigment thin films, poly-N-methylpyrrol was formed to a thickness of only 0.1 μm. Further, while poly-N-methylpyrrol usually has a dark brown color, in the present Example, the polymer gave substantially no effect to the light transmittance of the color filter since its film thickness was thin.

As the result, the adhesiveness of the pigment thin films was also good as in Example 6. Also, the present Example provides a merit of greatly improving the liquid crystal driving property as in the previous Examples.

That is, poly-N-methylpyrrol is a conductive organic material, whereby a voltage loss due to the pigment thin film can be reduced.


### Example 8

The same electrodepositing method as in Example 6 was applied to each color of pigment thin films of Example 6 when effecting formation and sintering thereof and the same good results as in Example 6 could be obtained.


### Example 9

The same electrodepositing method as in Example 6 was applied with respect to each of the three micellar colloidal aqueous solutions but the formation and subsequent washing with water was carried out without sintering and this procedure repeated three times to prepare a color filter of three colors. The same good results as in Example 6 were obtained.


### Example 10

The same electrodepositing method as in Example 7 was applied to each color of pigment thin films of Example 7 when effecting formation and sintering thereof and the same good results as in Example 7 were obtained.


### Example 11

The same electrodepositing method as in Example 7 was applied to each color of pigment thin films of Example 7 when effecting formation and washing with water thereof without sintering and the procedure was repeated three times to prepare three colors of a color filter. The same good results as in Example 7 were obtained.

Example 12

After forming pigment thin films of three colors in the same manner as in Example 6, a thermosetting type polyimide precursor solution was coated on the pigment thin films by the spin coating method. As the thermosetting type polyimide precursor solution, PSI-G7425ZSA produced by Chisso K.K. was used. It was used by diluting with ethyl carbitol to achieve a 2 % solid component concentration. After the coating, the sample was air-dried for 30 minutes and then sintered at 200° C for 30 minutes.

According to the above operations, the pigment thin films were impregnated by the polyimide resin due to the impregnating action of the polyimide precursor and a polyimide film of only 0.05 μm thickness was formed on the pigment thin films.

As the result, the adhesiveness of the pigment thin films was as good as in Example 6 and the liquid crystal driving property was also the same.

Example 13

After forming pigment thin films of three colors in the same manner as in Example 6, a photocuring type polyimide precursor solution was coated on the pigment thin films by the roll coating method. As the photocuring type polyimide precursor solution, PI-300 produced by Ube Industries, Ltd. was used. It was used by diluting with N-methyl-2-pyrrolidone to achieve a 2 % solid component concentration. After the coating, the sample was air-dried for 30 minutes, pre-baked at 100° C for 5 minutes and irradiated by a UV irradiating device with an energy of 1 J/cm$^2$. Further, post-baking was carried out at 200° C for 5 minutes.

According to the above operations, the pigment thin films were impregnated by the polyimide resin due to the impregnating action of the polyimide precursor and a polyimide film of only 0.08 μm thickness was formed on the pigment thin films.

As the result, the adhesiveness of the pigment thin films was as good as in Example 6 and the liquid crystal driving property was also the same.

Furthermore, regarding Examples 12 and 13, there is a secondary effect in that the polyimide films can be used as a liquid crystal orientation films. That is, a merit can be obtained that if coating of an oriented film is devised, it can be used a treatment for improving the adhesiveness.

Also, in the coating methods as in Examples 12 and 13, various materials can be applied, and for example, if conductivity is applied to the pigment thin films by using an organic metal solution capable of forming a conductive oxide film such as $SnO_2$ or $ZnO$ which can be formed by coating and sintering, a great merit of markedly improving the liquid crystal driving property can be expected.

Example 14

On a glass substrate having a diagonal of 5 inches (12.7 cm) was formed an ITO film by sputtering, and further it was made to 300 stripe-like electrodes, each having a width of 100 μm by using the photolithographic method.

Next, each of micellar colloidal aqueous solutions of red, green and blue pigments (organic pigments) having compositions shown in Table 3 was prepared and each pigment film was formed by electrolysis, respectively.

Table 3

| Pigment | Pigment concentration | Surfactant *1 | Supporting electrolyte *2 |
|---|---|---|---|
| 1 Red *3 | 6 g/l | 1.5 mM | 0.05 M |
| 2 Green *4 | 14 g/l | 1.5 mM | 0.05 M |
| 3 Blue *5 | 7 g/l | 1.0 mM | 0.05 M |

*1 Ferrocenyl PEG (produced by Dojin Kagaku Co.) (which can be oxidized and reduced by electrolysis)
*2 Lithium bromide
*3 Anthraquinone series pigment
*4 Brominated chlorinated copper phthalocyanine
*5 α type copper phthalocyanine

The electrolysis potential was 0.4 V (vs. S.C.E.) and the electrolysis time was adjusted so that the thickness of each pigment film was 1.0 μm. Also, the pigment films were formed by selectively passing a current through different electrodes during electrolysis so as to obtain a repeated stripe pattern of red, green and blue. After film formation, the formed material was sintered at 180°C for 30 minutes.

By the above operations, a pigment thin film comprising the repeated stripe pattern of the three colors of red, green and blue can be formed.

Subsequently, the substrate with the pigment thin film obtained by the above operations formed thereon was immersed in the following thermosetting type polymer precursor solution.

The polymer precursor solution was an aqueous solution containing acrylic acid and melamine with the ratio of 7 : 3, and also containing isopropyl alcohol and butyl cellosolve (produced by K.K. Shimizu), and it was used after adjusting the concentration of acrylic acid + melamine to about 5 % by weight. In the solution, amines were also contained as a neutralizing agent.

The dipping time was set to 5 minutes, and after having been taken out of the solution, the substrate was washed in flowing water for about 30 seconds, it was subjected to shaking off drying of water by a spin dryer and sintered at 180°C for 30 minutes. According to the above operations, the acryl melamine polymer was formed with a network structure in the pigment thin films. The film thickness after this treatment was 1.05 μm or so and it was increased only by 0.05 μm compared with that of the pigment film alone.

An adhesive test was carried out by peeling off a scotch tape from the color filter completed according to the above operations. As the result, the pigment film did never peel off. Also, when the products were immersed in an alkali defatting solution (60°C) and ultrasonic wave washing was conducted, while the conventional product with the pigment thin film only partly peeled off at 20 seconds, the product of the present Example caused no problem by ultrasonic wave washing for 3 minutes or so.

Further, the product was used in the liquid crystal panel making process but no problem was caused and not damage by a rubbing treatment.

Finally, by using a TN type liquid crystal, a color liquid crystal panel was prepared and the driving characteristics of the liquid crystal were examined. As the result, no difference was found as compared with the conventional pigment film single material, i.e. good results can be obtained.

Example 15

After forming pigment thin films of three colors in the same manner as in Example 14, this substrate with the pigment thin films thereon was immersed in a photocurable type polyimide precursor solution.

As the photocuring type polyimide precursor solution, PI-300 using N-methyl-2-pyrrolidone as a main solvent produced by Ube Industries, Ltd. was used. It was used by diluting with ethylcarbitol to achieve a 5 % solid component concentration.

The dipping time was 10 minutes and after having been taken out of the solution, the substrate was washed in flowing water for one minute. Then, it was subjected to shaking off drying of water by a spin dryer.

Subsequently, it was irradiated by a UV irradiating device with an energy of 1 J/cm². Then, post-baking was carried out at 180° C for 5 minutes. According to the above operations, the polyimide resin was formed with a network structure in the pigment thin films. The film thickness was increased only by 0.03 μm compared with that of the pigment film alone.

The adhesiveness of the pigment thin film was as good as in Example 14 and the liquid crystal driving property was also good.

Example 16

After forming the pigment thin films of three colors in the same manner as in Example 14, the substrate with the pigment thin films thereon was immersed in a polyparabanic acid solution (produced by Tonen Sekiyu Kagaku, diluted to 5 % by weight).

The dipping time was 10 minutes and after having been taken out of the solution, the substrate was washed in flowing water for one minute. Then, it was subjected to shaking off drying of water by a spin dryer.

Subsequently, it was sintered at 200° C for 30 minutes to evaporate the solvent and to form a network structure of the polyparabanic acid resin film in the pigment thin film. The film thickness was increased only by 0.1 μm compared with that of the pigment film alone.

The adhesiveness of the pigment thin film was as good as in Example 14 and liquid crystal driving property was also good.

Example 17

A color filter with three colors was prepared by using the same starting materials as in Example 14 but each color of the pigment thin films was prepared by coating a pigment thin film, sintering the same, immersing in a polymer precursor solution and then sintering the same, and the procedures were repeated three times. As the results, the same good properties as in Example 14 could be obtained.

Example 18

The same method as in Example 17 was applied to each color of pigment thin films of Example 17, but when forming a pigment thin film, operations of immersing in a polymer precursor solution and sintering were repeated three times without sintering after formation of each pigment thin film, to prepare three colors of a color filter. As the result, the same good properties as in Example 14 were obtained.

Example 19

A micellar colloidal solution of an organic pigment was prepared. The composition of the solution comprised 1.5 mM of ferrocenyl PEG (produced by Dojin Kagaku Co.), 7 g/l of α type copper phthalocyanine as an organic pigment and 0.05 M of lithium bromide as a supporting electrolyte.

In the micellar colloidal solution were immersed an electrode comprising a glass substrate on which an ITO film was formed by sputtering and a Pt plate as an opposite electrode, and electrolysis was conducted. The electrolytic potential was 0.4 V (vs. S.C.E.). The electrolysis time was adjusted so as to achieve a pigment film thickness of 0.3 μm.

Subsequently, said glass substrate was immersed in a polymer precursor solution for 5 minutes to impregnate the pig ment film by the polymer precursor. As the polymer solution, an aqueous solution (produced by K.K. Shimizu) containing acrylic acid and melamine with a ratio of 7 : 3 and also containing isopropyl alcohol and butyl cellosolve, in which the concentration of the acrylic acid and melamine had been adjusted to 5 % by weight was employed.

After immersing in the polymer precursor solution, the substrate was sufficiently washed in flowing water. Thereafter, the substrate was again immersed in the above micellar solution and the pigment film was further formed thereon with a thickness of 0.3 μm.

By repeating immersion in the micellar solution and the polymer precursor solution four times, a pigment film having a thickness of 1.2 μm was obtained which then was sintered at 150° C for 30 minutes.

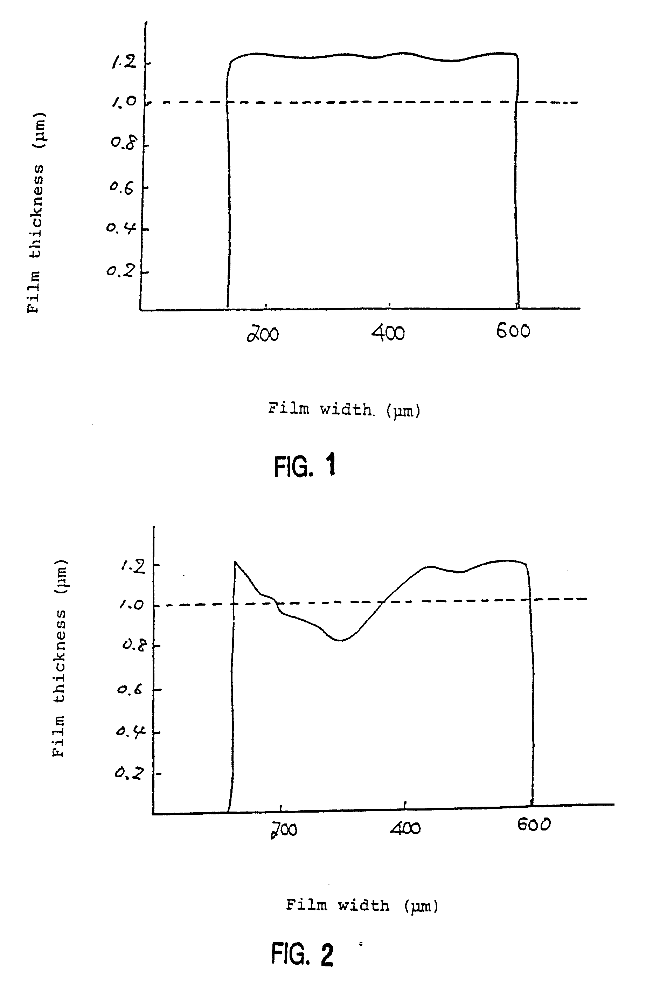

In the course of the film formation process, the pigment film did not peel off, and thus a uniform pigment film, which even did not peel off by the peeling test using a scotch tape, can be obtained. In Fig. 1, a cross sectional view of the pigment film is shown. This figure is a result of a measurement by means of Alfa Step produced by Tencor Co. As to be seen from the Figure, it can be understood that a smooth film surface can be obtained. This smoothness did not cause any problem such as insufficient orientation even when it had been used as a color filter of a liquid crystal panel.

## Example 20

By using the same micellar colloidal solution as in Example 19, a pigment film with a thickness of 0.25 μm was formed on an ITO electrode under the same electrolytic conditions as in Example 19. After this glass substrate was immersed in a photocurable type polyimide precursor solution PI-300 (produced by Ube Industries, Ltd.) with a solid concentration of 1 % (diluted with N-methyl-2-pyrrolidone), it was washed with the diluting solution, air-dried for 30 minutes, and then a curing treatment with pre-baking at 100°C for 5 minutes, exposing to UV rays with 7 mJ/cm$^2$, and then post-baking at 200°C for 5 minutes, was carried out.

The above processes were repeated four times to prepare a pigment film with a thickness of 1 μm.

Adhesiveness and smoothness of the film were also good as in Example 19.

## Comparative example

By using the same substrate as in Example 19, a film of α type copper phthalocyanine was formed by electrolysis on an ITO electrode with a thickness of 500 μm.

As a micellar colloidal solution, an aqueous solution comprising:

| | |
|---|---|
| Ferrocenyl PEG (produced by Dojin Kagaku Co.) | 1.5 mM |
| α type cooper phthalocyanine | 7 g/l |
| Lithium bromide | 0.05 M |

was prepared and using a Pt plate as an opposite electrode, electrolysis was conducted at 0.4 V (vs. S.C.E.) to form an α type copper phthalocyanine film with a thickness of 1.2 μm.

A cross section of the film was measured in the same manner as in Example 19 and the result is shown in Fig. 2 which shows that the film was not smooth. When a liquid crystal panel was prepared according to the predetermined liquid crystal panel producing process by using this substrate, orientation troubles occurred on the surface of the α type cooper phthalocyanine film.

## Example 21

A micellar colloidal solution of an organic pigment was prepared. The solution comprised 1.5 mM of ferrocenyl PEG (produced by Dojin Kagaku Co.), 10 g/l of brominated chlorinated copper phthalocyanine as an organic pigment and 0.05 M of lithium bromide as supporting electrolyte.

By using the same glass substrate provided with an ITO film thereon as an electrode, a pigment film was formed under the same conditions as in Example 19 with a thickness of 0.2 μm by adjusting the electrolysis time.

Subsequently, said glass substrate was immersed in the same polymer precursor solution as in Example 19 and after washing with water, it was sintered at 150°C.

By repeating the above procedure four times, a pigment film having a thickness of 0.8 μm was obtained.

Adhesiveness and smoothness of the film were also good as in Example 19.

## Comparative example

By using the same micellar colloidal solution and the substrate with the ITO film thereon as in Example 19, a pigment film with a thickness of 1.2 μm was formed under the same electrolysis conditions. After sintering at 180°C for 30 minutes, the smoothness of the surface was measured (Fig. 2).

The smoothness was bad, and the film was easily peeled off by the peelingg test using a scotch tape.

Also, when a liquid crystal panel was prepared by using the pigment film, orientation troubles occurred at the portion where unevenness is remarkable.

Example 22

On a glass substrate having a diagonal of 5 inches (12.7 cm) an ITO film was formed as a transparent electrode by sputtering, and then was made into 300 stripe-like electrodes, each having a width of 100 μm, by using the photolithographic method.

Next, each of micellar colloidal aqueous solutions of red, green and blue pigments (organic pigments) having compositions shown in Table 4 was prepared, respectively.

Table 4

| Pigment | Pigment concentration | Surfactant *1 | Supporting electrolyte *2 |
|---|---|---|---|
| 1 Red *3 | 6 g/l | 1.5 mM | 0.05 M |
| 2 Green *4 | 14 g/l | 1.5 mM | 0.05 M |
| 3 Blue *5 | 7 g/l | 1.0 mM | 0.05 M |

*1 Ferrocenyl PEG (produced by Dojin Kagaku Co.) (which can be oxidized and reduced by electrolysis)
*2 Lithium bromide
*3 Anthraquinone series pigment
*4 Brominated chlorinated copper phthalocyanine
*5 α type copper phthalocyanine

Further, to the above three kinds of micellar colloidal solutions, a mixture of acrylic acid and melamine with a ratio of 7 : 3 was added to an amount of 0.5 % by weight.

The pigment thin film was formed by selectively passing a current through different electrodes during electrolysis so as to achieve a repeated stripe pattern of blue, green and red. During electrolysis, the electrolysis potential was 0.4 V (vs. S.C.E.) and the electrolysis time was adjusted so as to obtain each of the pigment films with a thickness of 0.3 μm. Next, the electrolysis potential was made 2.0 V (vs S.C.E.) and electrolysis was conducted for a time until the polymer "soaked" into voids of the pigment film. By repeating the above procedure three times, a color filter with a stripe pattern was formed in which each pigment film had a thickness of 1.0 μm. That is, by electrodeposition, the thickness was increased by 0.1 μm only.

Thereafter, by sintering at 180°C for 30 minutes, a color filter having good adhesiveness was obtained.

That is, according to a peeling test by means of a scotch tape adhered to the completed color filter, no peel off was caused.

Also, the surface of the color filter was extremely smooth and the problem that the pigment film peels off in the micellar colloidal solution did not occur.

When the color filer was used in the liquid crystal panel making process to make a panel, no problem was caused as to the adhesiveness and it was not damaged by the rubbing treatment. By using this panel, the driving characteristics of a liquid crystal were measured but no difference was observed as compared with those of the conventional pigment film single material. Further, the durability was evaluated under the conditions of 60°C x 90 % R.H. but problems such as an insufficient orientation were not caused.

Example 23

On a glass substrate having a diagonal of 5 inches (12.7 cm) an ITO film was formed as a transparent electrode by sputtering, and then, it was worked to 321 stripe patterns, each having a width of about 150 μm, by using the photolithographic method. End portions of the patterns were subjected to patterning to a predetermined shape so as to be capable of connecting an IC for liquid crystal driving at the post-treatment.

At first, on the formed stripe patterns, pigment films of the three primary colors of R, G and B were formed. For effecting the formation of the pigment films, electrolyte aqueous solutions having the compositions shown in Table 5 in which organic pigments are colloidally dispersed were used. The pigment films of R, G and B were formed in the respective electrolyte solution by selectively passing a current through respective transparent electrodes so as to arrange R, G and B, alternately and repeatedly.

The electrolysis potential was 0.4 V (vs. S.C.E.) in each case and a Pt plate was used as an opposite electrode. The pigment films were formed to a film thickness of 0.9 μm for R, 1.2 μm for G and 0.7 μm for B. The order of formation was R, G and B, and after formation of each film, the substrate was washed in pure water and then sintered at 180° C for 30 minutes.

Table 5

| Pigment film | Organic pigment used | Organic pigment concentration | Surfactant *1 | Supporting electrolyte *2 |
|---|---|---|---|---|
| R | Dianthraquinonyl red | 5 g/l | 1.5 | 0.1 |
| | Disazo yellow | 1 g/l | mM | M |
| G | Phthalocyanine green | 11 g/l | 1.5 | 0.1 |
| | Disazo yellow | 2 g/l | mM | M |
| B | Phthalocyanine blue | 6 g/l | 1.5 | 0.1 |
| | Dioxazine violet | 1 g/l | mM | M |

*1 Ferrocenyl PEG (produced by Dojin Kagaku Co.)
*2 Lithium sulfate

Subsequently, a transparent polymer material was formed on each of the pigment films. The formation of the polymer material was conducted by selectively passing a current through the electrodes having the pigment films formed thereon. That is, on the pigment film of R was formed the polymer material with a thickness of 0.5 μm, on G 0.2 μm and on B 0.7 μm, respectively, whereby total film thickness including the pigment films and the polymer materials was 1.4 μm.

For the formation of the polymer material, an aqueous electrolyte (produced by K.K. Shimizu) comprising acrylic acid and melamine with a ratio of 7 : 3, isopropyl alcohol and butyl cellosolve was used. The polymer material of this Example can be formed by so-called electrodeposition, and the electrodeposition was conducted by using a Pt plate as an opposite electrode and applying a voltage of 3.5 V (vs. S.C.E.). After the electrodeposition, the formed material was washed in pure water for 30 seconds and then sintered at 180° C for 30 minutes.

According to the above operations, a color filter comprising a stripe pattern wherein the pigment layer comprises the organic pigments and the polymer material, and wherein the film portions corresponding to the three primary colors of R, G and B have the same film thickness can be obtained.

By using the color filter, an STN color liquid crystal panel was prepared by passing through the predetermined liquid crystal panel making procedure. When display unevenness of the panel was evaluated by driving it with a 1/240 duty, the problems of the prior art turned out to be solved whereby the effects of the present invention were confirmed.

Example 24

By using the same method as in Example 23, a pigment layer was formed with a thickness of 1.8 μm including the pigment films and the polymer material, and a liquid crystal panel was prepared. The liquid crystal driving property thereof was somewhat lowered due to the increased film thickness of the pigment layer, but no display unevenness (fluctuation in contrast) was caused.

In both Example 23 and Example 24, a polymer material formed at a portion other than the pigment film can be prevented by previously coating a resist at such portion.

Example 25

In the present Example, in order to achieve a uniform thickness of each pigment film, a method of codepositing an organic polymer was used.

On a glass substrate having a diagonal of 5 inches (12.7 cm) an ITO film was formed as a transparent electrode by sputtering, and then, it was made to a pattern of 320 stripes, each having a width of about 150 $\mu$m, by using the photolithographic method. End portions of the pattern were subjected to patterning to a predetermined shape so as to be capable of connecting an IC for liquid crystal driving. On the stripe pattern, pigment films of the three primary colors of R, G and B were formed by selectively passing a current through respective electrode stripes so as to arrange R, G and B in this order, repeatedly.

First, one liter of an electrolyte having a composition shown in Table 6 was prepared, and the above substrate was immersed therein and subjected to electrolysis to form a pigment thin film of R only on predetermined stripes of the transparent electrode pattern. At this time, as an organic polymer to be codeposited, polypropylene was used. That is, in the pigment thin film of R thus formed, the polypropylene was codeposited.

Table 6

| Organic pigment | Organic polymer | Surfactant | Supporting electrolyte |
|---|---|---|---|
| Dianthraquinonyl red | Polypropylene | Ferrocenyl PEG *1 | $Li_2SO_4$ |
| 6 g/l | 3 g/l | 1.5 mM | 0.1 M |

*1 produced by Dojin Kagaku Co.

The electrolysis potential was 0.4 V (vs. S.C.E.) and a Pt plate was used as an opposite electrode. The film thickness was made to 1.3 $\mu$m (pigment + organic polymer) and it was sufficient in color tone. After formation of the film, it was dried at 150 °C for 10 minutes.

In the above procedures, peel off of the film was caused neither at film formation nor when water washing was carried out after formation of the film.

Next, one liter of an electrolyte having the composition shown in Table 7 was prepared, and the above substrate with the red pigment thin film thereon was immersed therein and subjected to electrolysis to form a pigment thin film of G only on another set of stripes of the transparent electrode pattern. At this time, as an organic polymer to be codeposited, the same one as mentioned above was used. Since, when the pigment thin film of G is formed alone, a film thickness of about 1 $\mu$m is usually sufficient (in the case of R, 0.9 $\mu$m) with respect to the color tone, the compositional ratio of the organic polymer was somewhat decreased compared to that in the case of the above electrolyte of R whereby the codeposited amount was somewhat decreased.

Table 7

| Organic pigment | Organic polymer | Surfactant | Supporting electrolyte |
|---|---|---|---|
| CuPcClBr*1 | Polypropylene | Ferrocenyl PEG | $Li_2SO_4$ |
| 14 g/l | 2 g/l | 2.5 mM | 0.1 M |

*1 Brominated chlorinated copper phthalocyanine.

The electrolysis potential was 0.4 V (vs, S.C.E.) and a Pt plate was used as an opposite electrode. The film thickness was made to 1.3 μm (pigment + organic polymer) as in the above case of R. There was no problem as to the color tone. After formation of the film, it was dried at 150°C for 10 minutes. Also, in the above procedures, no peel off of the film occurred at the film formation and water washing after formation of the film.

Subsequently, one liter of an electrolyte having a composition shown in Table 8 was prepared, and the above substrate having already formed thereon the pigment thin films of R and G was immersed therein and subjected to electrolysis to form a pigment thin film of B on the remaining stripes of the transparent electrode pattern. At this time, as an organic polymer to be codeposited, the same one as mentioned above was used. Since, when the pigment thin film of B is formed alone, a film thickness of about 0,7 μm is usually sufficient with respect to the color tone, the compositional ratio of the organic polymer was somewhat increased compared to that in the case of the above electrolyte of R whereby it was adjusted so as to achieve the same film thickness as that of the other pigment films and sufficient in color tone.

Table 8

| Organic pigment | Organic polymer | Surfactant | Supporting electrolyte |
|---|---|---|---|
| CuPcCl *1 | Polypropylene | Ferrocenyl PEG | $Li_2SO_4$ |
| 7 g/l | 5 g/l | 1.0 mM | 0.1 M |

*1 Monochloro copper phthalocyanine.

The electrolysis potential was the same as mentioned above. The film thickness was made to 1.3 μm (pigment + organic polymer) as with the other pigment films. There was no problem as to the color tone. After formation of the film, it was dried at 150°C for 10 minutes. Also, in the above pro cedures, no peel off of the film occurred at the film formation and water washing after formation of the film.

According to the above procedures, a color filter comprising codeposited films of organic pigments and organic polymers and having the same film thickness in each of the three primary colors of R, G and B can be obtained.

By using this color filter, an STN color liquid crystal panel was prepared by passing through the predetermined liquid crystal panel making process (wherein the processing temperatures in each process was made 150°C or below) was prepared. When display unevenness (fluctuation in contrast) of the panel was evaluated by driving it with a 1/240 duty, the problems of the prior art turned out to be solved whereby the effects of the present invention were confirmed.

Examples 26

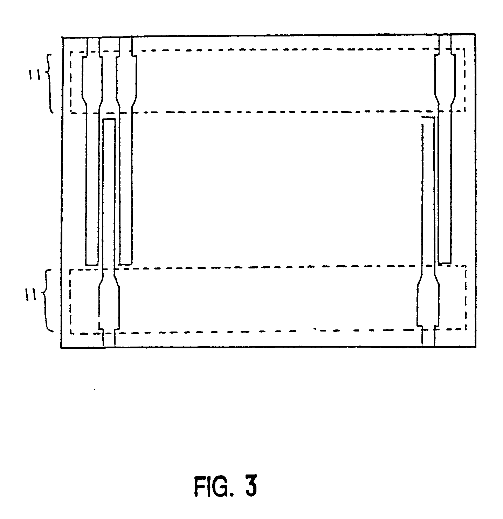

On a glass substrate having a diagonal of 2.6 inches (6.6 cm) an ITO film was formed as a transparent electrode by sputtering, and then made into 300 stripelike electrodes, each having a width of 100 μm and a line pitch of 130 μm as shown in Fig. 3

Next, by screen printing, an alkali soluble type thermosetting resist UDE-203 produced by Taiyo Ink co. was printed in a pattern shown by the dotted line portions in Fig. 3. By that, portions where no pigment film was to be formed were covered.

Next, each of micellar colloidal aqueous solutions of red, green and blue pigments (organic pigments) having the compositions shown in Table 9 was prepared and each pigment film was formed by electrolysis, respectively. After the electrolytic film formation, washing with water was sufficiently carried out and after confirming that no micellar colloidal aqueous solution remained between the resist and the glass, the next step was carried out.

18

Table 9

| | Pigment | Pigment concentration | Surfactant *1 | Supporting electrolyte *2 |
|---|---|---|---|---|
| 1 Red *3 | 6 g/l | 1.5 mM | 0.05 M |
| 2 Green *4 | 14 g/l | 1.5 mM | 0.05 M |
| 3 Blue *5 | 7 g/l | 1.5 mM | 0.05 M |

*1 Ferrocenyl PEG (produced by Dojin Kagaku Co.) (which can be oxidized and reduced by electrolysis)
*2 Lithium bromide
*3 Anthraquinone series pigment
*4 Brominated chlorinated copper phthalocyanine
*5 $\alpha$ type copper phthalocyanine

The electrolysis potential was 0.4 V (vs. S.C.E.) and the electrolysis time was adjusted so as to have each of the pigment films 1.0 $\mu$m thick. Also, the pigment thin layer was formed by selectively passing a current through respective electrodes during electrolysis so as to achieve repeated stripe patterns of red, green and blue. After film formation, the formed material was sintered at 150°C for 30 minutes.

By the above operations, the pigment thin films comprising the repeated stripe patterns of the three colors of red, green and blue were formed.

Subsequently, the substrate with the thus formed pigment thin films thereon was immersed in a polymer precursor solution which is capable of electrodeposition, and electrodeposition of the polymer precursor was conducted by utilizing again the transparent electrodes on which the pigment thin films were formed as an electrode for electrodeposition.

The polymer precursor solution was an aqueous solution containing acrylic acid and melamine with the ratio of 7 : 3 and also containing isopropyl alcohol and butyl cellosolve (produced by K.K. Shimizu), and it was used after adjusting the concentration of acrylic acid + melamine to 5 % by weight.

Electrodeposition was conducted by applying + 3.5 V between the transparent electrodes on which the pigment thin films had been formed as an anode and an opposite electrode made of platinum, for 5 minutes. After electrodeposition, the substrate was washed in pure water for 30 seconds and after shaking off drying of water by a spin dryer, sintered at 150°C for 30 minutes.

According to the above operations, an acryl-melamine polymer was formed in the pigment films. Also, on the pigment films, only 0.05 $\mu$m of a polymer film was formed.

Thereafter, in order to remove the resist, the substrate was dipped in a 10 % KOH solution at 40°C for one minute, washed with water sufficiently, and then neutralized by dipping into a 5 % $H_2SO_4$ solution for one minute, and then washed with water.

When the surface of the color filter was examined, it could be confirmed that the pigment film was not formed at an IC connecting portion of the liquid crystal panel and a sealing portion, and also it did not remain at the boundary line between the resist film and the glass substrate.

Finally, by using a TN type liquid crystal, a color liquid crystal panel was prepared and the driving characteristics and the durability of the liquid crystal were examined. As the result, regarding the driving characteristics, no difference was observed compared with the conventional one, and regarding the durability, it was substantially the same as that of a TN liquid crystal panel having no color filter.

Example 27

On a portion of a glass substrate on which the same ITO stripe pattern as in Example 26 was formed, in which the pigment films are not necessary, a resist was formed by offset printing.

As the resist, UDE-203 used in Example 26, to which 0.1 % by weight of a fluoro coating agent FX-3325 (produced by Sumitomo 3 M) was added was used.

Following the same procedures as in Example 26, a color filter was prepared.

When the surface of the color filter was examined, it turned out that the pigment film was not formed at an IC connecting portion of the liquid crystal panel and a sealing portion, and also it did not remain at the boundary line between the resist film and the glass substrate.

Also, when a color liquid crystal panel was prepared by using a TN type liquid crystal, the driving characteristics and the durability of the liquid crystal were substantially the same as in Example 26.

Example 28

A UV curing type resist ink 81108 (2) (produced by Okuno Seiyaku K.K.) was used as a resist material and 0.05 % by weight of a fluorine type surfactant Florade (produced by Sumitomo 3M) FC-725 was added thereto.

By using the above resist material, a color filter was prepared according to the same procedures as in Example 26. At this time, the pigment film did not remain at the boundary line between the resist film and the glass substrate although sufficient washing with water had not been carried out in the procedures.

Also, when a color liquid crystal panel was prepared by using a TN type liquid crystal in the same manner as mentioned above, the driving characteristics and the durability of the liquid crystal were substantially the same as in Example 26.

As can be seen from the above Examples, according to the present invention, solutions can be provided regarding provision of conductivity to the pigment film, improvement in adhesiveness, smoothness of the surface, uniformness in the film thickness and prevention of pigment film formation at an unnecessary portion which are problems of prior art color filters using an organic pigment film formed by electrodeposition.

Also, the processes provided by the present invention are each easy in production technique and low in cost so that mass production can be realized.

**Claims**

1. A color filter comprising a transparent substrate and a transparent electrode thin film formed thereon prepared by the steps of:
the first step of forming the transparent electrode thin film on the transparent substrate and subjecting said transparent electrode thin film to patterning to a predetermined pattern,
the second step of forming a pigment film by immersing the transparent electrode substrate prepared in the first step in a micellar aqueous solution of a surfactant having a redox reactivity and having an organic pigment dispersed therein colloidally and performing an electrolysis, and
the third step of forming a polymer material tissue on at least voids in the pigment film, or on the voids of the pigment film and on the pigment film,
said transparent electrode prepared by the first step being used as an electric signal transmitting medium of a display device to which the transparent electrode is applied.

2. A process for preparing a color filter which comprises the steps of:
the first step of forming the transparent electrode thin film on the transparent substrate and subjecting said transparent electrode thin film to patterning to a predetermined pattern,
the second step of forming a pigment film by immersing the transparent electrode substrate prepared in the first step in a micellar aqueous solution of a surfactant having a redox reactivity and having an organic pigment dispersed therein colloidally and performing an electrolysis, and
the third step of forming a polymer material tissue on at least voids in the pigment film, or on the voids of the pigment film and on the pigment film.

3. The process according to claim 2, wherein, in the second step, the organic pigment and a conductive material are simultaneously dispersed colloidally in the micellar aqueous solution and codeposited on the transparent electrode by the electrolysis.

4. The process according to claim 2, wherein in the third step the polymer material tissue is formed by an electrochemical method.

5. The process according to claim 2, wherein in the third step the polymer material tissue is formed by a coating method.

6. The process according to claim 2, wherein in the third step the polymer material tissue is formed by immersing the substrate prepared in the second step in a polymer precursor solution or a polymer material solution to impregnate the pigment film by said polymer precursor or polymer material.

7. The process according to any of claims 2 to 6, wherein the pigment film is prepared by repeating the second and the third steps alternately at least twice.

8. The process according to claim 2, wherein, in the second step, the pigment film composed of an organic pigment and a polymer material is formed on the transparent electrode by using the step of dispersing colloidally the organic pigment in the micellar aqueous solution of the surfactant and dissolving therein a polymer precursor mate rial which is capable of depositing and electrochemically film forming, the step (a) of subjecting to electrolysis at a micellar destruction potential of the surfactant or more and at the film formation potential of the polymer precursor or less, and the step (b) of subjecting to electrolysis at a film formation potential of the polymer precursor or more.

9. The process according to claim 8, wherein the pigment film is prepared by repeating the step (a) and the step (b) alternately at least twice.

10. The process according to claim 2, wherein the polymer material tissue is formed by an electrochemical method such that the film thickness of individual pigment films is the same.

11. The process according to claim 2, wherein, in the second step, the organic pigment and organic polymer fine particles having high transparency are simultaneously dispersed colloidally in the micellar aqueous solution and codeposited on the transparent electrode by the electrolysis.

12. The process according to claim 2, wherein the pigment film is formed by the steps of, as a pre-treatment of the second step, coating a resist on a selected portion of the transparent electrode, effecting the second step, effecting the third step with an electrochemical method and then removing of said resist as a post-treatment of the third step.

13. The process according to claim 12, wherein a water repellent substance is added to the resist.

Film width. (μm)

## FIG. 1

Film width (μm)

## FIG. 2

FIG. 3